(19) Europäisches Patentamt
European Patent Office
Office européen des brevets

(11) **EP 1 449 611 B1**

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(51) Int Cl.:
***B23K 9/10*** *(2006.01)*     ***B23K 9/095*** *(2006.01)*

(21) Anmeldenummer: **03028407.9**

(22) Anmeldetag: **11.12.2003**

(54) **Lichtbogenschweissgerät**

Arc welding apparatus

Appareil de soudage à l'arc

(84) Benannte Vertragsstaaten:
**DE FR GB IT**

(30) Priorität: **19.02.2003 DE 10307066**

(43) Veröffentlichungstag der Anmeldung:
**25.08.2004 Patentblatt 2004/35**

(73) Patentinhaber: **EWM Hightec Welding GmbH
56271 Mündersbach (DE)**

(72) Erfinder: **Szczesny, Michael
56271 Mündersbach (DE)**

(74) Vertreter: **Cohausz & Florack
Patent- und Rechtsanwälte
Bleichstrasse 14
40211 Düsseldorf (DE)**

(56) Entgegenhaltungen:
**EP-A- 0 410 088**     **GB-A- 2 046 536
US-B1- 6 469 491**

**Beschreibung**

Die Erfindung betrifft ein Lichtbogenschweißgerät mit einem wechselstromgespeisten Gleichrichter, einem insbesondere über einen Zwischenkreis daran angeschlossenen Wechselrichter, dessen Brückendiagonalen von einer Steuereinrichtung derart getaktet werden, dass ein vom Wechselrichter angesteuerter Stromwandler mit einem wechselweise getakteten Primärstrom $I_{Pr}$ beaufschlagbar ist, und mit einem sekundärseitig des Stromwandlers angeordneten zweiten Gleichrichter, an dessen Ausgang der den Schweißprozess versorgende Sekundärstrom $I_{sek}$ vorliegt, sowie ein hierauf gerichtetes Verfahren.

Eine Vorrichtung bzw. ein Verfahren der eingangs genannten Art ist aus der EP 0 410 088 B1 bekannt. Bei dieser bekannten Vorrichtung erfolgt die Erfassung des Sekundärstromes, der ein wesentlicher Parameter zur Steuerung des Schweißprozesses ist, durch eine entsprechende Messschaltung. Hierzu ist ein kostenaufwendiger Stromwandler vorzusehen, so dass die sekundärseitige Strommessung genau erfolgen kann.

Aus der DE 198 05 408 ist ein Lichtbogenschweißgerät bekannt, bei welchem die Ansteuersignale der Stromventile 2a-2d des Wechselrichters durch Vergleich einer vorgegebene Dreicksspannung mit einer Steuerspannung $U_{steuer}$ derart erfolgt, dass auf eine positive Spannungszeitfläche $V_1$ der Spannung $U_{pr}$ eine gleichgroße negative Spannungszeitfläche $V_2$ folgt.

Bei dieser Vorrichtung wird durch die spezielle Ansteuerung ein symmetrischer Fluss im Trafo erzeugt und somit dessen Sättigung vermieden.

Aus der US 64 69 491 B1 ist eine Stromquelle bekannt, bei der der sekundäre Strom mittelbar über den Primärstrom eines Übertragers erfasst wird. Dabei wird zur Kompensation des durch den Magnetisierungsstrom verursachten Fehlers eine Mittelung während der Energieübertragungsintervalle durchgeführt.

Der Erfindung liegt die Aufgabe zugrunde, eine Vorrichtung bzw. ein Verfahren der eingangs genannten Art dahingehend weiter zu entwickeln, dass die Steuerung des Schweißgerätes unter Verzicht auf eine sekundärseitige Stromerfassung erfolgen kann.

Diese Aufgabe wird erfindungsgemäß dadurch gelöst, dass eine den zeitlichen Verlauf des Primärstroms erfassende Abtasteinrichtung vorgesehen ist, der eine Detektoreinrichtung zugeordnet ist, derart, dass zum Zeitpunkt des Nulldurchgangs des Magnetisierungsstromes $I\mu$ der Augenblickswert des Primärstroms $I_{Pr}$ erfassbar und abspeicherbar ist, und dass eine Recheneinheit der Abtasteinrichtung zugeordnet ist, mittels der aus dem abgespeicherten Wert des Primärstroms ein dem Sekundärstrom entsprechender Wert berechenbar ist.

Die erfindungsgemäße Lösung sieht vor, dass durch die Erfassung des zeitlichen Verlaufs des Primärstroms der gewünschte Wert für den Sekundärstrom abgebildet wird und zwar genau dann, wenn der Magnetisierungsstrom $I\mu$ des Stromwandlers einen Nulldurchgang aufweist. Unter Zugrundelegung des bekannten Ersatzschaltbildes eines Übertragers entspricht im Fall des Nulldurchgangs des Magnetisierungsstroms ($I\mu = 0$) der gemessene Primärstrom - über das Übersetzungsverhältnis des Stromwandlers korrigiert - genau dem Sekundärstrom.

Die Erfindung zeichnet sich also dadurch aus, dass an einer sehr viel geeigneteren Stelle eine Stromerfassung erfolgt, nämlich auf der Primärseite des Stromwandlers (Transformators), dass mittels einer geeigneten Abtasteinrichtung die Zuordnung zu dem Nulldurchgang des Magnetisierungsstromes erfolgt und hieraus der Sekundärstrom berechnet wird.

Bevorzugte Ausführungsformen der Erfindung finden sich in den Unteransprüchen.

Die Erfindung wird im Folgenden anhand einer ein Ausführungsbeispiel darstellenden Zeichnung näher erläutert. Dazu zeigen:

Fig. 1 ein bekanntes Ersatzschaltbild für einen Transformator;

Fig. 2 ein Blockschaltbild eines aus dem Stand der Technik bekannten Lichtbogen-Schweißgeräts;

Fig. 3 eine zeitliche Darstellung von Spannungs- und Stromverläufen zur Erläuterung der erfindungsgemäßen Lösung.

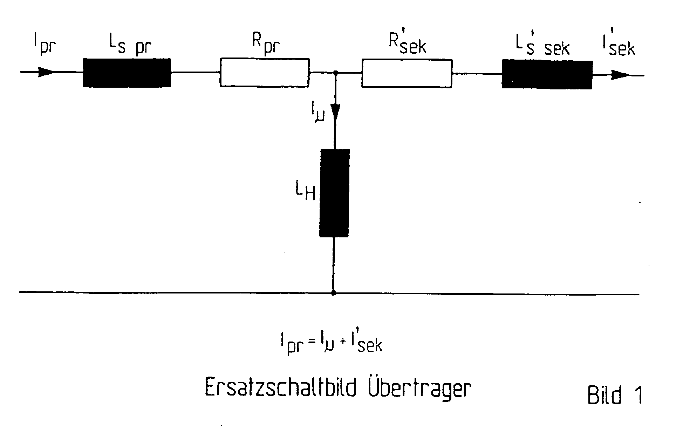

Das in Fig. 1 dargestellte Ersatzschaltbild eines Transformators/Übertragers zeigt die primärseitigen Größen primäre Streuinduktivität $L_{Spr}$, Primärwiderstand $R_{pr}$, die sekundärseitigen Größen $R'_{sek}$ und die sekundärseitige Streuinduktivität $LS'_{sek}$. Im Querzweig des Ersatzschaltbildes fließt der Magnetisierungsstrom $I\mu$ durch die Hauptinduktivität $L_H$. Der primärseitige Strom $I_{pr}$ teilt sich nach diesem Ersatzschaltbild also auf in den Magnetisierungsstrom $I\mu$ und den sekundärseitigen Strom

$$I´_{sek}, \text{ wobei für } I´_{sek} \text{ gilt } I´_{sek} = \frac{I_{sek}}{\ddot{U}},$$

d.h., es gilt die Beziehung $I_{pr} = I\mu + I'_{sek}$.

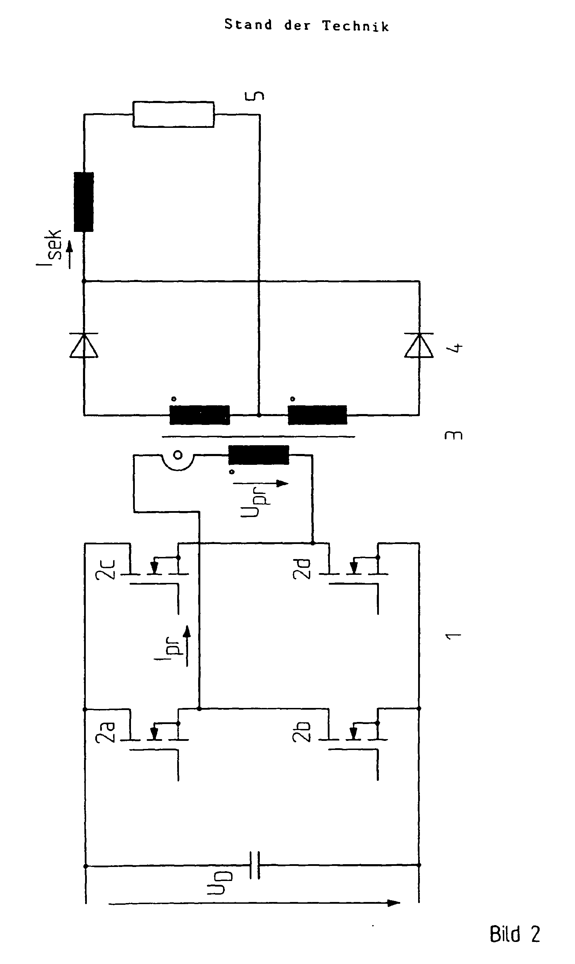

Fig. 2 zeigt den Aufbau eines aus dem Stand der Technik bekannten Lichtbogenschweißgerätes. Dargestellt ist der dem primärseitigen Gleichrichter zugeordnete Zwischenkreis, an dem die Spannung $U_D$ anliegt. Die vier Brückendiagonalen eines Wechselrichters 1 weisen jeweils ein Stromventil 2a,2b,2c,2d auf, welche derart von einer nicht dargestellten Steuereinrichtung geschaltet werden, dass primärseitig ein wechselweise getakteter Primärstrom $I_{pr}$ in einen Stromwandler 3 fließt.

Sekundärseitig ist der Sekundärwindung des Stromwandlers 3 ein weiterer Gleichrichter 4 zugeordnet, an dessen Ausgang der Sekundärstrom $I_{sek}$ in den Schweißprozess 5 fließt.

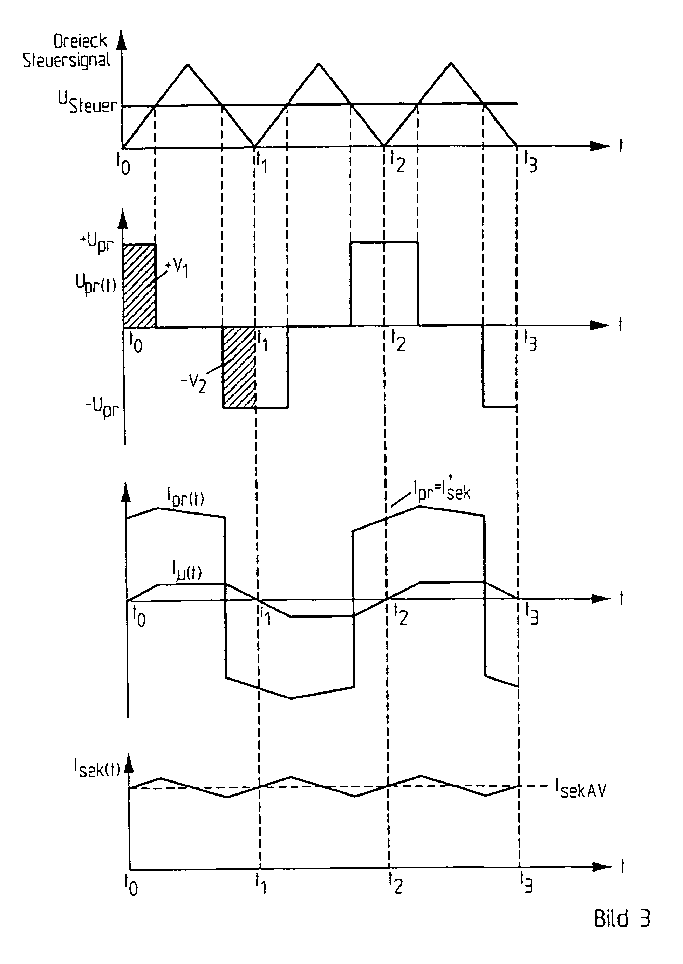

Fig. 3 zeigt untereinander angeordnet die zeitlichen Verläufe

- einer dreiecksförmigen Steuerspannung zur Ansteuerung des Wechselrichters 1

- der Primärspannung $U_{pr}$ an der Primärwicklung des Stromwandlers 3,

- des Primärstroms $I_{pr}$, also des Stroms, der in den primärseitigen Teil des Stromwandlers 3 fließt,

- des Magnetisierungsstroms $I\mu$ und

- des sekundärseitigen Schweißstroms $I_{sek}$

- jeweils in Abhängigkeit der Zeit t.

Die Ansteuersignale der Stromventile 2a-2d des Wechselrichters 1 werden durch den Vergleich der im oberen Diagramm dargestellten dreiecksförmigen Spannung mit einer Steuerspannung $U_{steuer}$ gebildet.

Die Taktung der Stromventile 2a-2d des Wechselrichters 1 erfolgt dadurch wie in dem nachfolgenden Diagramm von Fig. 3 dargestellt, wobei die Spannungszeitflächen $V_1$, $V_2$ der Spannung $U_{pr}$ jeweils gleich groß sind. Hierdurch wird erzwungen, dass der Magnetisierungsstrom $I\mu$ zu den Zeiten $t_1$ ... $t_2$ ... $t_3$ jeweils einen Nulldurchgang ausweist. Der zeitliche Verlauf des Primärstroms $I_{pr}$ ergibt sich durch die Steuerung der Stromventile, und der zeitliche Verlauf des sekundärseitigen Stroms $I_{sek}$ ist im unteren Diagramm dargestellt.

Maßgeblicher Parameter für die Steuerung des Schweißprozesses ist der Wert des sekundärseitigen Stroms $I_{sek}$ , und zwar dessen Mittelwert $I_{AV}$. Dieser wird erfindungsgemäß dadurch generiert, dass zum Zeitpunkt, in dem im Verlauf des Magnetisierungsstroms $I\mu$ ein Nulldurchgang erzwungen wird, also zu den Zeiten $t_1$, $t_2$, der zugehörige Augenblickswert des Primärstroms $I_{pr}$ erfasst und abgespeichert wird und anschließend mit dem Übersetzungsverhältnis $\ddot{U}$ multipliziert wird. Wie aus der Gleichung im Zusammenhang mit Fig. 1 entnommen werden kann, gilt für den Zeitpunkt

$I\mu = 0$ nämlich die Beziehung $I_{pr} = I´_{sek} = I_{sek}/\ddot{U}$.

## Patentansprüche

1. Lichtbogenschweißgerät mit einem wechselstromgespeisten Gleichrichter, einem insbesondere über einen Zwischenkreis daran angeschlossenen Wechselrichter, dessen Brückendiagonalen von einer Steuereinrichtung derart getaktet werden, dass ein vom Wechselrichter angesteuerter Stromwandler mit einem wechselweise getakteten Primärstrom ($I_{pr}$) beaufschlagbar ist, und mit einem sekundärseitig des Stromwandlers angeordneten zweiten Gleichrichter, an dessen Ausgang der den Schweißprozess versorgende Sekundärstrom ($I_{sek}$) vorliegt,
**dadurch gekennzeichnet, dass**
eine den momentanen zeitlichen Verlauf des Primärstroms ($I_{pr}$) erfassende Abtasteinrichtung vorgesehen ist, der eine Detektoreinrichtung zugeordnet ist, derart, dass zum Zeitpunkt des Nulldurchgangs des Magnetisierungsstromes ($I\mu$) der Augenblickswert des Primärstroms ($I_{pr}$) detektierbar und abspeicherbar ist, und dass der Abtasteinrichtung eine Recheneinheit zugeordnet ist, mittels der aus dem abgespeicherten Augenblickswert des Primärstroms ein dem Sekundärstrom ($I_{sek}$) entsprechender Wert berechenbar ist.

**2.** Lichtbogenschweißgerät nach Anspruch 1,
**dadurch gekennzeichnet, dass**
die Abtasteinrichtung eine Sample- and Holdschaltung ist.

**3.** Lichtbogenschweißgerät nach Anspruch 1,
**dadurch gekennzeichnet, dass**
der Recheneinheit als Multiplikationsgröße das Übersetzungsverhältnis(Ü)des Stromwandlers vorgebbar ist.

**4.** Verfahren zum Betrieb eines Lichtbogenschweißgerätes, bei dem über einen wechselstromgespeisten Gleichrichter, insbesondere über einen Zwischenkreis, ein Wechselrichter beaufschlagt wird, dessen Brückendiagonalen von einer Steuereinrichtung derart getaktet werden, dass ein an den Wechselrichter angeschlossener Stromwandler mit einem wechselweise getakteten Primärstrom ($I_{pr}$) beaufschlagt wird und dass sekundärseitig des Stromwandlers eine Gleichrichtung des Stroms erfolgt und der Schweißprozess mit einem Sekundärstrom ($I_{sek}$) versorgt wird,
**dadurch gekennzeichnet, dass**
der zeitliche Verlauf des Primärstroms ($I_{pr}$) mittels einer Abtasteinrichtung erfasst wird, und dass in dem Moment, in dem der Magnetisierungsstrom ($I\mu$) einen Nulldurchgang aufweist, der Augenblickswert des Primärstroms abgespeichert wird und hieraus in einem nächsten Schritt der Augenblickswert des sekundärstroms ($I_{sek}$) durch Multiplikation mit dem Übersetzungsverhältnis des Stromwandlers berechnet wird.

**5.** Verfahren nach Anspruch 4,
**dadurch gekennzeichnet, dass**
der Zeitpunkt des Nulldurchganges des Magnetisierungsstromes dadurch vorgebbar ist, dass die Stromventile (2a-2d) so angesteuert werden, dass einer positiven spannungszeitfläche ($V_1$) der Spannung ($U_{pr}$) eine gleichgroße negative Spannungszeitfläche ($V_2$) folgt.

**Claims**

**1.** An arc welding unit, with a rectifier fed with an alternating current, and with an inverter connected to it, in particular via an intermediate circuit, whose bridge diagonals are synchronised by a control device such that a current transformer controlled by the inverter can be acted upon by an alternately synchronised primary current ($I_{pr}$), and with a second rectifier arranged on the secondary side of the current transformer, at whose output the secondary current ($I_{sek}$) supplying the welding process is present,
**characterised in that** a sampling device is provided recording the instantaneous timewise characteristic of the primary current ($I_{pr}$), to which is assigned a detector device such that at the point in time of the passage through zero of the magnetising current ($I\mu$) the instantaneous value of the primary current ($I_{pr}$) can be detected and stored, and such that a computing unit is assigned to the sampling device, by means of which computing unit a value corresponding to the secondary current ($I_{sek}$) can be computed from the stored value of the primary current.

**2.** The arc welding unit according to Claim 1,
**characterised in that** the sampling device is a sample-and-hold circuit.

**3.** The arc welding unit according to Claim 1,
**characterised in that** the transmission ratio (Ü) of the current transformer can be prescribed to the computing unit as a multiplication parameter.

**4.** A method for the operation of an arc welding unit, in which an inverter is acted upon by a rectifier fed with an alternating current, in particular, via an intermediate circuit, the bridge diagonals of the inverter being synchronised by a control device such that a current transformer controlled by the inverter is acted upon by an alternately synchronised primary current ($I_{pr}$), and such that a rectification of the current takes place on the secondary side of the current transformer, and the welding process is supplied with a secondary current ($I_{sek}$),
**characterised in that** the timewise characteristic of the primary current ($I_{pr}$) is recorded by means of a sampling device and **in that** at the moment at which the magnetising current ($I_\mu$) passes through zero the instantaneous value of the primary current is stored and in a next step the instantaneous value of the secondary current ($I_{sek}$) is computed from the primary current by means of multiplication with the transmission ratio of the current transformer.

**5.** The method according to Claim 4,
**characterised in that** the point in time when the magnetising current passes through zero can be prescribed **in**

**that** the current valves (2a-2d) are controlled such that a positive voltage-time area ($V_1$) of the voltage ($U_{pr}$) is followed by a negative voltage-time area ($V_2$) of equal magnitude.

**Revendications**

1. Appareil de soudage à l'arc comportant un redresseur alimenté en courant alternatif, un onduleur qui lui est raccordé notamment par l'intermédiaire d'un circuit intermédiaire et dont les diagonales du pont sont synchronisées par un dispositif de commande de telle manière qu'un convertisseur de courant activé par l'onduleur peut être soumis à un courant primaire ($I_{pr}$) synchronisé de manière alternative, et comportant un deuxième redresseur disposé du côté secondaire du convertisseur de courant et à la sortie duquel est présent le courant secondaire ($I_{sek}$) alimentant le processus de soudage, **caractérisé en ce qu'**est prévu un dispositif de balayage détectant la courbe dans le temps du courant primaire ($I_{pr}$) et auquel est associé un dispositif de détection de telle manière qu'il est possible de détecter et de mémoriser la valeur instantanée du courant primaire ($I_{pr}$) à l'instant du passage par zéro du courant de magnétisation ($I_\mu$), et **en ce qu'**au dispositif de balayage est associée une unité de calcul au moyen de laquelle il est possible de calculer une valeur correspondant au courant secondaire ($I_{sek}$) à partir de la valeur instantanée du courant primaire mémorisée.

2. Appareil de soudage à l'arc selon la revendication 1, **caractérisé en ce que** le dispositif de balayage est un échantillonneur-bloqueur.

3. Appareil de soudage selon la revendication 1, **caractérisé en ce qu'**à l'unité de calcul peut être prescrit en tant que grandeur de multiplication le rapport de conversion (Ü) du convertisseur de courant.

4. Procédé d'utilisation d'un appareil de soudage à l'arc dans lequel, par l'intermédiaire d'un redresseur alimenté en courant alternatif, notamment par l'intermédiaire d'un circuit intermédiaire, on sollicite un onduleur dont les diagonales du pont sont synchronisées par un dispositif de commande de telle manière qu'un convertisseur de courant raccordé à l'onduleur est soumis à un courant primaire ($I_{pr}$) synchronisé de manière alternative, qu'un redressement du courant s'effectue côté secondaire du convertisseur de courant et que le processus de soudage est alimenté par un courant secondaire ($I_{sek}$), **caractérisé en ce que** la courbe dans le temps du courant primaire ($I_{pr}$) est détectée au moyen d'un dispositif de balayage, et **en ce qu'**à l'instant où le courant de magnétisation ($I_\mu$) présente un passage par zéro, on mémorise la valeur instantanée du courant primaire à partir de laquelle, dans une étape suivante, la valeur instantanée du courant secondaire ($I_{sek}$) est calculée par multiplication par le rapport de conversion du convertisseur de courant.

5. Procédé selon la revendication 4, **caractérisé en ce que** l'instant du passage par zéro du courant de magnétisation peut être prescrit **en ce que** les régulateurs de débit (2a-2d) sont activés de telle manière qu'une surface tension-temps ($V_1$) positive de la tension ($U_{pr}$) est suivie d'une surface tension-temps ($V_2$) négative d'autant.

$I_{pr}$     $L_{s\ pr}$       $R_{pr}$        $R'_{sek}$       $L'_{s\ sek}$    $I'_{sek}$

$I_{\mu}$

$L_H$

$$I_{pr} = I_{\mu} + I'_{sek}$$

Ersatzschaltbild Übertrager         Bild 1

Stand der Technik

Bild 2

Bild 3